(19) Europäisches Patentamt
European Patent Office
Office européen des brevets

(11) **EP 3 405 779 B1**

(12) **EUROPÄISCHE PATENTSCHRIFT**

(45) Veröffentlichungstag und Bekanntmachung des Hinweises auf die Patenterteilung:
**19.05.2021 Patentblatt 2021/20**

(21) Anmeldenummer: **17705026.7**

(22) Anmeldetag: **24.01.2017**

(51) Int Cl.:
**G01N 29/02** (2006.01)   **G01H 5/00** (2006.01)
**G01N 29/024** (2006.01)   **G01N 29/22** (2006.01)
**G01N 29/24** (2006.01)   **G10K 11/24** (2006.01)
**G10K 11/28** (2006.01)

(86) Internationale Anmeldenummer:
**PCT/EP2017/051447**

(87) Internationale Veröffentlichungsnummer:
**WO 2017/125613 (27.07.2017 Gazette 2017/30)**

(54) **VERFAHREN ZUR AKUSTISCHEN BESTIMMUNG VON EIGENSCHAFTEN EINES MEDIUMS UND VORRICHTUNG ZUR AKUSTISCHEN BESTIMMUNG VON EIGENSCHAFTEN EINES MEDIUMS MIT REFLEXIONSELEMENT**

METHOD FOR ACOUSTICALLY DETERMINING PROPERTIES OF A MEDIUM, AND DEVICE FOR ACOUSTICALLY DETERMINING PROPERTIES OF A MEDIUM, COMPRISING A REFLECTIVE ELEMENT

PROCÉDÉ DE DÉTERMINATION ACOUSTIQUE DE CARACTÉRISTIQUES D'UN MILIEU ET DISPOSITIF DE DÉTERMINATION ACOUSTIQUE DE CARACTÉRISTIQUES D'UN MILIEU À L'AIDE D'UN ÉLÉMENT DE RÉFLEXION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2016 DE 102016200947**

(43) Veröffentlichungstag der Anmeldung:
**28.11.2018 Patentblatt 2018/48**

(73) Patentinhaber: **SensAction AG**
**96450 Coburg (DE)**

(72) Erfinder: **RAUTENBERG, Jens**
**59590 Geseke (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**EP-A2- 2 343 548     DE-A1-102011 119 673**
**US-B2- 6 378 377**

**Beschreibung**

Die vorliegende Erfindung betrifft ein Verfahren zur Bestimmung von physikalischen und/oder chemischen Eigenschaften eines Mediums nach dem Oberbegriff des Anspruchs 1 sowie eine Vorrichtung zur Bestimmung von physikalischen, chemischen und/oder biologischen Eigenschaften eines Mediums nach dem Oberbegriff des Anspruchs 6.

Das Medium, dessen physikalische, chemische und/oder biologische Eigenschaften durch ein gattungsgemäßes Verfahren zu bestimmen sind, ist ein Gas oder vorzugsweise eine Flüssigkeit oder ein weiches Material, insbesondere ein hochviskoses, teigartiges oder pastöses Medium. Bei den zur Bestimmung der Eigenschaften genutzten akustischen Wellen handelt es sich beispielsweise um Ultraschallwellen, die von einem entsprechenden Sender durch ein Sendesignal erzeugt werden.

Bei einem bekannten Verfahren zur Bestimmung physikalischer, chemischer und/oder biologischer Eigenschaften eines Mediums werden z.B. wenigstens zwei akustische Wellen durch ein Sendesignal erzeugt, die sich zumindest teilweise durch das Medium entlang identischer oder unterschiedlicher Ausbreitungsrichtungen ausbreiten, bevor sie jeweils an einem in der jeweiligen Ausbreitungsrichtung liegendem Empfänger empfangen werden. Beispielsweise werden akustische Wellen in einem strömenden Medium einerseits in eine erste Ausbreitungsrichtung in Strömungsrichtung des Mediums und andererseits in eine zweite Ausbreitungsrichtung entgegen der Strömungsrichtung des Mediums erzeugt. Aus den an den jeweiligen Empfängern generierten Empfangssignalen kann dann eine Laufzeitdifferenz ermittelt und hieraus z. B. auf die (mittlere) Strömungsgeschwindigkeit des Mediums geschlossen werden. Werden alternativ oder zusätzlich noch absolute Laufzeiten einer akustischen Welle von einem Sender zu einem Empfänger mit Hilfe der Empfangssignale ermittelt, können weitere Rückschlüsse über physikalische, chemische und/oder biologische Eigenschaften des Mediums gewonnen werden, wie z. B. dessen Dichte, Temperatur oder Zusammensetzung.

Aus der WO 2008/034878 A2 ist eine Vorrichtung bekannt, bei der akustische Oberflächenwellen erzeugt werden, die in einem Wellenleiter Volumenschallwellen in das jeweilige Medium einkoppeln. Durch wiederholte Auskopplung von Oberflächenwellen an denjenigen Stellen, an denen die Volumenschallwelle auf eine das Medium berandende Wandung trifft, werden an einem Empfänger wiederum akustische Oberflächenwellen empfangen, deren Laufzeiten und Laufzeitendifferenzen charakteristisch für das Medium sowie dessen physikalische, chemische und/oder biologische Eigenschaften sind. Vergleichbare Vorrichtungen gehen aus der EP 2 343 548 A2, der US 6,378,377 B2 und der DE 10 2011 119 673 A1 hervor.

Im Übrigen gibt es Ultraschallverfahren zur Messung der Schallgeschwindigkeit in Fluiden, sei es im Direktstrahlverfahren oder aber mittels Leaky Lambwellen basierter Systeme. Der Vorteil der Leaky Lambwellen-Systemen ist ihre große Robustheit gegenüber dispergierten Partikeln oder Blasen, da im Vergleich zum Direktstrahlverfahren eine deutlich größere Chance besteht, dass Anteile des ausgesandten Schallpakets auch den Empfänger erreichen. Neben der Schallgeschwindigkeit sind die Temperatur, vor allem aber auch die Stoffdichte wichtige Messgrößen, wenn eine stoffliche Zusammensetzung untersucht werden soll. Zur Messung der Stoffdichte gibt es ebenfalls eine Reihe verschiedener bekannter Messgeräte. Die Stoffdichte kann in gewissen Grenzen ebenfalls durch Lambwellensensoren bestimmt werden. Nachteilig bei den verfügbaren Lambwellensensoren ist jedoch ihre vergleichbar große Bauform, womit der Zugang zu vielen Anwendungsfeldern schwierig ist.

Es ist daher Aufgabe der Erfindung in dieser Hinsicht ein verbessertes Verfahren und eine in dieser Hinsicht verbesserte Vorrichtung zur Bestimmung von physikalischen, chemischen und/oder biologischen Eigenschaften eines Mediums bereitzustellen.

Diese Aufgabe wird sowohl mit einem Verfahren des Anspruchs 1 als auch mit einer Vorrichtung des Anspruchs 6 gelöst.

Mögliche vorteilhafte Ausführungsvarianten sind insbesondere durch die Unteransprüche gegeben.

Erfindungsgemäß ist insbesondere ein Verfahren zur Bestimmung von physikalischen, chemischen und/oder biologischen Eigenschaften eines in einem Innenraum eines Wellenleiters befindlichen Mediums mithilfe wenigstens einer akustischen Welle vorgeschlagen, die sich zumindest teilweise durch das Medium ausgebreitet hat. Hierbei ist vorgesehen, dass

a. mittels eines Senders wenigstens eine erste Oberflächenwelle an einer Außenfläche eines den Innenraum berandenden ersten Wandungsabschnitts des Wellenleiters angeregt wird, die sich an dem ersten Wandungsabschnitt entlang einer ersten Ausbreitungsrichtung ausbreitet,

b. die wenigstens eine erste Oberflächenwelle an einer dem Medium zugewandten Innenfläche des ersten Wandungsabschnitts eine sich in dem Medium ausbreitende akustische Welle anregt, deren Ausbreitungsrichtung eine von dem ersten Wandungsabschnitt weg weisende Richtungskomponente umfasst,

c. die sich in dem Medium ausbreitende akustische Welle an einer Innenfläche eines dem ersten Wandungsabschnitt gegenüberliegenden zweiten Wandungsabschnitts des Wellenleiters zumindest teilweise als zweite Oberflächenwelle einkoppelt, die sich an dem zweiten Wandungsabschnitt entlang einer zweiten Ausbreitungsrichtung ausbreitet,

d. anhand empfangener Oberflächenwellen, die zumindest teilweise auf akustischen Wellen zurückgehen, die sich in dem Medium ausgebreitet haben, physikalische, chemische und/oder biologische Eigenschaften des Mediums bestimmt werden,

e. der erste Wandungsabschnitt und der zweite Wandungsabschnitt über ein Verbindungsstück des Wellenleiters miteinander verbunden sind, so dass sich eine zweite Oberflächenwelle wenigstens anteilig über das Verbindungsstück hinweg zu dem ersten Wandungsabschnitt ausbreitet,

f. an einem der Wandungsabschnitte und/oder dem Verbindungsstück wenigstens ein Reflexionselement vorgesehen ist, an dem zumindest ein Teil der wenigstens einen ersten Oberflächenwelle als dritte Oberflächenwelle reflektiert wird,

g. mittels eines Empfängers an dem ersten Wandungsabschnitt zweite und dritte Oberflächenwellen empfangen werden, anhand derer physikalische, und/oder biologische Eigenschaften des Mediums bestimmt werden, und

h. der Wellenleiter in einem Hohlraum eines Gehäuseteils der Vorrichtung angeordnet ist.

Bei den angeregten Oberflächenwellen handelt es sich vorzugsweise um Lamb-Wellen oder Wellen im Übergangsbereich zwischen Rayleigh-Wellen und Lamb-Wellen.

In einem Ausführungsbeispiel sind die ersten und zweiten Wandungsabschnitte als ebene Plattenabschnitte ausgeführt.

Insbesondere hierbei können die ersten und zweiten Wandungsabschnitte einstückig mit dem Verbindungsstück ausgebildet sein.

Für eine störungsfreie Ausbreitung in Richtung des ersten Wandungsabschnitts über das Verbindungsstück hinweg, ist das Verbindungsstück in einer Variante bezüglich des das Medium aufnehmenden Innenraums konvex nach außen gewölbt. Beispielsweise entspricht hierbei ein Wölbungsradius des Verbindungsstücks etwa dem 1,5-Fachen einer Wanddicke des ersten und/oder zweiten Wandungsabschnitts oder ist größer als das 1,5-Fache der Wanddicke.

Grundsätzlich kann das zu charakterisierende Medium in einem kleinen Analysevolumen vorhanden sein. In einer Variante befindet sich das Medium in einem Rohr. Es kann sich z.B. aber auch in einem Becher, einer Ölwanne oder einem Tank befinden.

Im Zuge einer erfindungsgemäßen Lösung kann insbesondere vorgesehen sein, dass der Sender und der Empfänger durch eine einzelne Sender-Empfänger-Einheit bereitgestellt sind, die wahlweise als Sender oder Empfänger betreibbar ist. Aufgrund der reflektieren Oberflächenwelle und der sich über das Verbindungsstück zu dem ersten Wandungsabschnitt und vorzugsweise zu dem Sender ausbreitenden zweiten Oberflächenwelle treffen am Ort des Senders Oberflächenwellen ein, die sich auf unterschiedliche Ausbreitungspfaden und zumindest teilweise auch anteilig - hier dann als akustische Welle, üblicherweise in Form von Volumenschallwellen - durch das zu charakterisierende Medium ausgebreitet haben. Derart können mit einer einzigen Sender-Empfänger-Einheit physikalische, chemische und/oder biologische Eigenschaften des Mediums bestimmt werden.

In einer Ausführungsvariante ist vorgesehen, dass der Innenraum an einer dem Verbindungsstück gegenüberliegenden Seite durch ein separates Verschlussteil geschlossen ist. Hierbei können der erste Wandungsabschnitt, der zweite Wandungsabschnitt und das Verbindungsstück gemeinsam in zumindest einem Bereich des Innenraums einen U-förmigen Querschnitt des Wellenleiters definieren. Beispielsweise ist somit der Wellenleiter mit den einstückig miteinander ausgeformten ersten und zweiten Wandungsabschnitten und dem Verbindungsstück U-förmig ausgebildet, sodass die ersten und zweiten Wandungsabschnitte die von dem Verbindungsstück als Basis vorstehenden Schenkel der U-Form definieren, und die offene Seite der U-Form ist durch ein separates Verschlussteil geschlossen.

Das separate Verschlussteil kann mit wenigstens einem Abschnitt in den Innenraum eingesteckt sein, in dem sich das zu bestimmende Medium befindet. Derart kann das Verschlussteil über den eingesteckten Abschnitt den Innenraum verschließen. In einer Variante weist das Verschlussteil zwei (Verschluss-) Abschnitte auf, wobei über den einen Abschnitt der Innenraum verschlossen ist und über den anderen Abschnitt ein den Wellenleiter aufnehmendes Gehäuseteil, an dessen eine offene Seite das Verschlussteil gesteckt ist. Der Wellenleiter ist hierbei erfindungsgemäß in einem Hohlraum des Gehäuseteils der Vorrichtung angeordnet. Dieser Hohlraum ist einer Variante mit einem Material niedriger akustischer Impedanz gefüllt oder vergossen, z.B. mit einem Material mit einer akustischen Impedanz kleiner 150000 Rayl (im MKS-Einheitensystem mit 1 Rayl = 1 $kg/m^2 s$).

An dem Verschlussteil kann ferner auch als Träger für den Sender und/oder den Empfänger dienen. Der Sender und/oder der Empfänger können somit vormontiert an dem Verschlussteil angeordnet sein und über das Anstecken des Verschlussteils an den Wellenleiter und/oder an das Gehäuseteil bestimmungsgemäß positioniert werden.

In einer Ausführungsvariante ist an dem Verschlussteil wenigstens ein Teil einer elektronischen Auswerteeinrichtung angeordnet, mittels der von dem Empfänger beim Empfang von Oberflächenwellen erzeugte Empfangssignale zur Bestimmung der physikalischen, chemischen und/oder biologischen Eigenschaften des Mediums ausgewertet werden. Die elektronische Auswerteeinrichtung kann hierbei ebenfalls an dem Verschlussteil vormontiert sein, sodass diese an dem Verschlussteil eine funktionsfähige und prüfbare Baueinheit bildet, die nachträglich an den Wellenleiter montierbar ist.

Alternativ oder ergänzend kann an dem Verschlussteil wenigstens ein Teil einer Temperatursensorik angeordnet sein, mittels der eine Temperatur des Mediums und/oder eines den Wellenleiter umgebenden Außenraums bestimmt wird. Messsignale einer solchen Temperatursensorik können dann direkt bei der Auswertung der beim Empfang von Oberflächenwellen erzeugte Empfangssignale für die Bestimmung der physikalischen, chemischen und/oder biologischen Eigenschaften des Mediums genutzt werden.

Um wenigstens eine elektronische Komponente, wie z.B. eine Komponente einer elektronischen Auswerteeinrichtung und/oder eine Komponente einer Temperatursensorik, vor äußeren Einflüssen, insbesondere Flüssigkeiten und/oder Gasen geschützt an dem Verschlussteil anzuordnen, kann die wenigstens eine elektronische Komponente zumindest teilweise in einer Vergussmasse aufgenommen sein.

In einer Ausführungsvariante umfasst das Reflexionselement eine offene oder mit einem Füllmaterial gefüllte Aussparung in dem ersten Wandungsabschnitt, dem zweiten Wandungsabschnitt und/oder in dem Verbindungsstück. Die Aussparung kann folglich insbesondere nur an einem der Wandungsabschnitte oder nur an dem Verbindungsstück vorgesehen sein oder aber sich auch sowohl an einem Wandungsabschnitt als auch an dem Verbindungsstück erstrecken. Insbesondere kann die Aussparung als eine Kerbe, insbesondere eine keilförmige Kerbe ausgebildet sein. An einer Kerbe ist aber die Wanddicke des jeweiligen Wandungsabschnitts und/oder des Verbindungsstückes lokal reduziert, um eine Reflexion hieran auftreffender Oberflächenwellen zu erreichen, die sich an dem Wandungsabschnitt oder dem Verbindungsstück ausbreiten.

Das Füllmaterial der Aussparung kann ein Material besonders hoher oder niedriger akustischer Impedanz sein, z.B. ein Kunststoffmaterial mit Wolfram-, Wolframkarbid- oder Glashohlkugelfüllung.

Anstelle einer Kerbe kann auch ein alternativ ausgestaltetes Reflexionselement vorgesehen sein, z.B. eine lokale Verdickung an dem ersten oder zweiten Wandungsabschnitt und/oder an dem Verbindungsstück. Die Verdickung erstreckt sich in einer Ausführungsvariante beispielsweise parallel zur Ausbreitungsrichtung der Oberflächenwellen mit einer Länge, die mindestens der Hälfte der Wellenlänge entsprechend. Beispielweise ist die Länge der Verdickung größer als eine Wanddicke des ersten oder zweiten Wandungsabschnitt und/oder an dem Verbindungsstück, an sie vorgesehen ist, aber kleiner als oder gleich dem Vierfachen diese Wanddicke.

Unabhängig von der Ausgestaltung des Reflexionselements ist dieses in einer Ausführungsvariante an einem der ersten und zweiten Wandungsabschnitte in der Nähe des Verbindungsstücks vorgesehen. Das Reflexionselement ist somit mit einem geringen Abstand zu dem Verbindungsstück vorgesehen, beispielsweise in einem Abstand, der weniger als 1/4 des Abstands beträgt, in dem der Sender zu dem Verbindungsstück angeordnet ist. Beispielsweist ist das Reflexionselement in einem Bereich vorgesehen ist, in dem eine konvexe, äußere Wölbung des Verbindungsstücks in eine geradlinig verlaufende Außenfläche eines ersten oder zweiten Wandungsabschnitts übergeht.

In einer Ausführungsvariante ist ein Abstand a zwischen dem Reflexionselement und dem Sender messtechnisch optimiert festgelegt. Hierbei ist z.B. festgelegt, dass für den Abstand a Folgendes gilt:

$$a > 0{,}5\,T_{min}\,c_{Ph} + b\left(1{,}8 + 0{,}5\sqrt{3{,}5\left(\frac{c_{F,max}}{c_{F,min}}\right)^2 - 1}\right).$$

Der Parameter $C_{Ph}$ steht hierbei für die Phasenwellengeschwindigkeit auf einem Wandungsabschnitt, $C_{F,max}$ für die größte zu messende Schallgeschwindigkeit im Medium (also diejenige Schallgeschwindigkeit, die die Messvorrichtung im Betrieb maximal messen können soll bzw. die mittels der Messvorrichtung gemessen werden kann), $C_{F,min}$ für die kleinste zu messende Schallgeschwindigkeit im Medium, b für den lichten Abstand zwischen den einander gegenüberliegenden Wandungsabschnitten und $T_{min}$ für eine durch eine elektronische Auswerteeinheit vorgegebene Mindestzeit zwischen zwei aufeinanderfolgenden Signalechos ist, die verstrichen sein muss, damit an dem Empfänger empfangene Signale in der Auswerteelektronik zeitlich aufgelöst werden können. Über die vorstehend angegebene Formel und die hierin enthaltenen Parameter, die für die Messvorrichtung vorgegeben werden oder sind, können somit für den Wellenleiter mit dem Reflexionselement definierte Konstruktionsvorgaben gemacht werden, um dessen Funktion z.B. mit der gewünschten Messgenauigkeit sicherzustellen.

Grundsätzlich kann das Medium in dem Innenraum entlang einer Strömungsrichtung von einem Einlass des Wellenleiters zu einem Auslass des Wellenleiters strömen, wobei dann die erste Ausbreitungsrichtung erzeugter Oberflächenwellen unter einem Winkel, insbesondere senkrecht, zu der Strömungsrichtung verläuft.

Der Sender und der Empfänger sind in einer Ausführungsvariante durch eine einzelne Sender-Empfänger-Einheit bereitgestellt sind, die wahlweise als Sender oder Empfänger betreibbar ist. Derart lassen sich Kosten und Montageaufwand reduzieren, da nur die Sender-Empfänger-Einheit montiert werden muss.

Der erste Wandungsabschnitt, der zweite Wandungsabschnitt und/oder das Verbindungsstück können aus Metall, einem Kunststoffmaterial, insbesondere einem schwach dämpfenden Kunststoffmaterial oder einer Keramik hergestellt sein.

Weiterhin ist eine Vorrichtung zur Bestimmung von physikalischen, chemischen und/oder biologischen Eigenschaften eines Mediums vorgeschlagen, mit

- einem akustischen Wellenleiter, der einen mit dem Medium zu füllenden Innenraum aufweist,
- einem Sender, mittels dem wenigstens eine erste Oberflächenwelle an einer Außenfläche eines den Innenraum berandenden ersten Wandungsabschnitts des Wellenleiters angeregt wird, die sich an dem ersten Wandungsabschnitt entlang einer ersten Ausbreitungsrichtung ausbreitet und die an einer dem Medium zugewandten Innenfläche des ersten Wandungsabschnitts eine sich in dem Medium ausbreitende akustische Welle anregt, deren Ausbreitungsrichtung eine von dem ersten Wandungsabschnitt weg weisende Richtungskomponente umfasst, wobei der Wellenleiter ausgestaltet und eingerichtet ist, dass die sich in dem Medium ausbreitende akustische Welle an einer Innenfläche eines dem ersten Wandungsabschnitt gegenüberliegenden zweiten Wandungsabschnitts des Wellenleiters zumindest teilweise als zweite Oberflächenwelle einkoppelt, die sich an dem zweiten Wandungsabschnitt entlang einer zweiten Ausbreitungsrichtung ausbreitet, und
- einer elektronischen Auswerteeinheit, mittels der anhand empfangener Oberflächenwellen, die zumindest teilweise auf akustischen Wellen zurückgehen, die sich in dem Medium ausgebreitet haben, physikalische, chemische und/oder biologische Eigenschaften des Mediums bestimmt werden.
  Hierbei ist ergänzend vorgesehen, dass
- der erste Wandungsabschnitt und der zweite Wandungsabschnitt über ein Verbindungsstück des Wellenleiters miteinander verbunden sind, so dass sich eine zweite Oberflächenwelle wenigstens anteilig über das Verbindungsstück hinweg zu dem ersten Wandungsabschnitt ausbreitet,
- an einem der Wandungsabschnitte und/oder dem Verbindungsstück wenigstens ein Reflexionselement vorgesehen ist, an dem zumindest ein Teil der wenigstens einen ersten Oberflächenwelle als dritte Oberflächenwelle reflektiert wird,
- mittels eines Empfängers an dem ersten Wandungsabschnitt zweite und dritte Oberflächenwellen empfangen werden, anhand derer mittels der mit dem Empfänger gekoppelten Auswerteeinrichtung physikalische, chemische und/oder biologische Eigenschaften des Mediums bestimmt werden, und
- der Innenraum an einer dem Verbindungsstück gegenüberliegenden Seite durch ein separates Verschlussteil geschlossen ist und/oder der Wellenleiter in einem Hohlraum eines Gehäuseteils der Vorrichtung angeordnet ist.

Mittels der vorgeschlagenen Vorrichtung ist dabei insbesondere das vorgeschlagene Verfahren durchführbar, sodass vorstehend und nachstehend erläuterte Vorteile und Merkmale von Ausführungsvarianten des Verfahrens auch für Ausführungsvarianten der Vorrichtung gelten und umgekehrt.

Die beigefügten Figuren veranschaulichen exemplarisch mögliche Ausführungsbeispiel der vorgeschlagenen Lösung.

Hierbei zeigen:

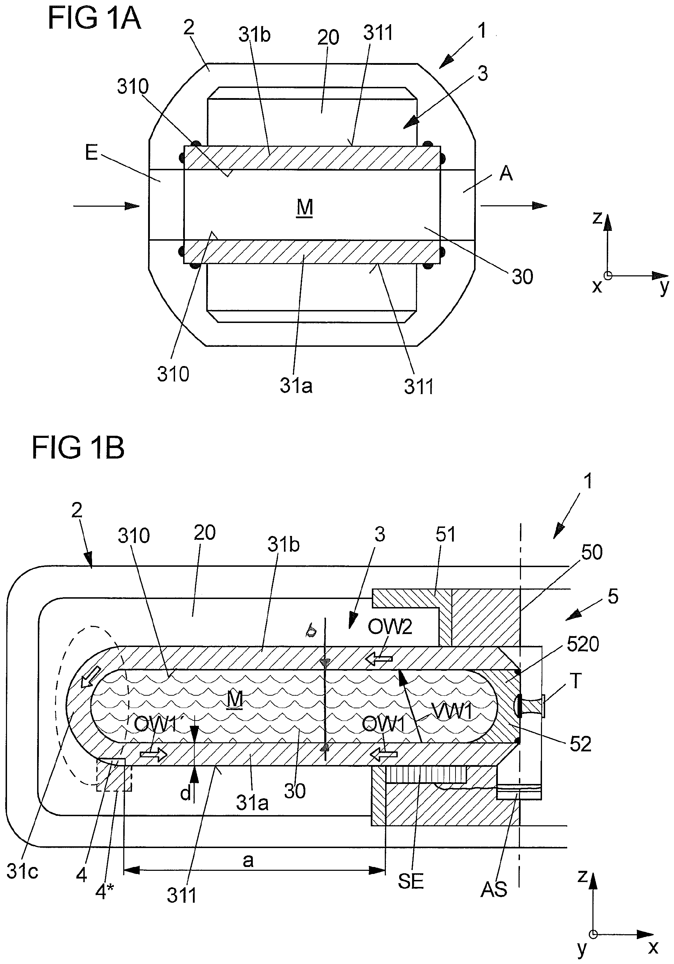

Figur 1A und 1B      in Längs- und Querschnittsansicht ein Ausführungsbeispiel einer vorgeschlagenen Messvorrichtung zur Durchführung einer Ausführungsvariante des vorgeschlagenen Verfahrens.

Mit den Figuren 1A und 1B wird ein mögliches Ausführungsbeispiel einer (Mess-) Vorrichtung 1 gezeigt, mittels der eine Variante eines vorgeschlagenen Verfahrens durchführbar ist.

Die hier dargestellte Messvorrichtung 1 weist ein Gehäuseteil 2 mit einem Hohlraum 20 auf, in dem ein Wellenleiter 3 untergebracht ist. Der Wellenleiter 3 umschließt einen Innenraum 30 mit einem Einlass E und einem Auslass A. Ausgehend von dem Einlass E kann der Innenraum 30 entlang einer Erstreckungsrichtung y in Richtung des Auslasses A von einem Medium M durchströmt werden.

Der Wellenleiter 3 weist im Querschnitt zwei sich quer zur Erstreckungsrichtung y gegenüberliegende plattenförmige Wandungsabschnitte 31a und 31b auf, die mit ihren Innenflächen 310 den Innenraum 30 beranden und über ein Verbindungsstück 31c miteinander verbunden sind.

An dem ersten Wandungsabschnitt 31a ist an einer von dem Innenraum 30 abgewandten Außenfläche 311 eine Sender-Empfänger-Einheit SE zur Anregung erster Oberflächenwellen OW1 angeordnet. Diese Oberflächenwellen OW1 breiten sich an dem ersten Wandungsabschnitt 31a senkrecht zur Erstreckungsrichtung y in Richtung -x aus und koppeln anteilig Volumenschallwellen VW1 in das Medium M ein. Diese Volumenschallwellen VW1 koppeln wiederum anteilig zweite Oberflächenwellen OW2 an dem gegenüberliegenden Wandungsabschnitt 31b ein. Diese zweiten Oberflächenwellen OW2 breiten sich ebenfalls in Richtung -x aus und damit über das Verbindungsstück 31c zurück zu der Sender-Empfänger-Einheit SE.

An dem ersten Wandungsabschnitt 31a im Bereich des Übergangs zu dem Verbindungsstück 31c ist ein Reflexionselement in Form einer Kerbe 4 vorgesehen, die auch mit einem Material verfüllt sein kann. An dieser Kerbe 4 werden die ersten Oberflächenwellen OW1 reflektiert, sodass sich reflektierte Oberflächenwellen OW1' in die entgegengesetzte Richtung +x zu der Sender-Empfänger-Einheit SE zurück ausbreiten. Mittels einer einzigen Sender-Empfänger-Einheit SE sind somit unterschiedliche Oberflächenwellen OW2 und OW1 erfassbar. Indem hierbei die Oberflächenwellen OW2 auf Volumenschallwellen VW1 zurückgehen, die sich durch das Medium M ausgebreitet haben, lassen sich hierdurch physikalische und/oder chemische und/oder biologische Eigenschaften des Mediums M bestimmen.

An einer dem Verbindungsstück 31c gegenüberliegenden Seite des Innenraums 30 ist dieser durch ein Verschlussteil 5 verschlossen. Das Verschlussteil 5 weist hierfür einen Schaftabschnitt 50 auf, der an einer offenen Seite des Gehäuseteils 2 fixiert ist. Über einen vorstehenden Verbindungskopf 51 des Schaftabschnitts 50 ist das Verschlussteil 5 in das Gehäuseteil 2 und über einen Verschlussabschnitt 520 des Schaftabschnitts 50 in den Innenraum 30 eingesteckt. Über den eingesteckten Verbindungskopf 51 des Verschlussteils 5 (der einen Gehäuse-Verschlussabschnitt definiert) ist eine offene Seite des Gehäuseteils 2 verschlossen, über den in den Innenraum 30 eingesteckten (Innenraum-) Verschlussabschnitt 520 ist wiederum der Innenraum 30 verschlossen und nach außen abgedichtet.

An dem Verschlussteil 5 ist an einem mit dem Schaftabschnitt 50 verbundenen Halter 52 eine Auswerteeinrichtung AS angeordnet, mittels der beim Empfang der Oberflächenwellen OW2, OW1' erzeugte Empfangssignale zur Bestimmung der physikalischen und/oder chemischen und/oder biologischen Eigenschaften des Mediums M ausgewertet werden. An dem Verschlussteil 5 ist auch eine Temperatursensorik T angeordnet, mittels der eine Temperatur des Mediums M und/oder eines den Wellenleiter 3 umgebenden Außenraums bestimmt wird. Dabei sind die an dem Verschlussteil 5 angeordneten elektronischen Komponenten der Auswerteeinrichtung AS und der Temperatursensorik T in einer Vergussmasse aufgenommen.

Die ersten und zweiten Wandungsabschnitte 31a, 31b bilden zusammen mit dem Verbindungsstück 31c eine gebogene Platte vorzugsweise aus Metall oder aber Keramik oder schwach dämpfendem Kunststoff, die das zu charakterisierende Medium M, z.B. ein Fluid, zumindest in einem kleinen Bereich umschließt. Die Lambwelle wird durch eine Piezokeramik der Sender-Empfänger-Einheit SE (Interdigitaltransducer oder Wedge-Transducer) auf der Platte an dem ersten Wandungsabschnitt 31a angeregt. Sie gelangt durch eine gezielt eingebrachte Kerbe 4 auf der wellenführenden Platte als Reflexion wieder zum ursprünglich sendenden Element, der Sender-Empfänger-Einheit SE, zurück. Zusätzlich gelangt ein Teil der Welle als Leakywelle durch das eingeschlossene Fluidvolumen auf den gegenüberliegenden zweiten Wandungsabschnitt 31b der Platte, wo sie erneut einkoppelt und über das Verbindungsstück 31c hinweg als Lambwelle der Reflexion folgend an der Kerbe 4 vorbei, zeitversetzt ebenfalls die Sender-Empfänger-Einheit SE erreicht. In der Folge lassen sich nach Umschalten des Sendeelements in den reziproken Empfangsmodus zwei Signalpakete detektieren, wovon Laufzeit und Laufzeitdifferenz hauptsächlich zur Schallgeschwindigkeitsbestimmung, das Amplitudenverhältnis zur Berechnung der Stoffdichte und die Laufzeit des ersten Wellenpakets (1. Reflexion) zur Temperaturmessung genutzt werden.

Die Kerbe 4 ist gerade so tief und breit, dass unter allen Bedingungen ein gleichmäßiges Verhältnis zwischen Plattenwellentransmission und -reflexion erreicht wird. Vorliegend ist die Kerbe 4 im Querschnitt keilförmig ausgebildet. Anstelle der Kerbe 4 kann aber auch eine alternativ ausgestaltete Aussparung als Reflexionselement vorgesehen sein. Beispielsweise kann eine zylinderförmige Aussparung vorgesehen sein. Die Zylinderachse einer solchen zylinderförmigen Aussparung kann hierbei parallel oder senkrecht zur Ausbreitungsrichtung +/-x der Oberflächenwellen OW1, OW1' verlaufen.

Vorliegend ist die Kerbe an dem ersten Wandungsabschnitt 31a ausgebildet, an der die sendende Sender-Empfänger-Einheit SE angeordnet ist. Die Kerbe 4 ist hierbei an der dem Medium M abgewandten Außenfläche 311 ausgebildet, und zwar beabstandet zu der Sender-Empfänger-Einheit SE in einem Bereich nahe des Verbindungsstücks 31c. Die Kerbe 4, die als lokale Verjüngung des Wandungsabschnitts 31a ausgeführt ist, sodass eine Wanddicke d des Wandungsabschnitts 31a (respektive der Platte) lokal reduziert ist, erstreckt sich bei der mit der Figur 1B dargestellten Variante insbesondere längs der zweiten Ausbreitungsrichtung +x in einem Bereich, in dem die konvexe, äußere Wölbung des Verbindungsstücks 31c in die geradlinig verlaufende Außenfläche 311 des ersten Wandungsabschnitts 31a übergeht.

Ein Abstand a der Kerbe 4 (oder einem alternativen Reflexionselement) von der sendenden Sender-Empfänger-Einheit SE ist ferner so gewählt, dass die folgende Bedingung erfüllt ist:

$$a \; > 0{,}5 T_{min} c_{Ph} + b \left( 1{,}8 + 0{,}5 \sqrt{3{,}5 \left( \frac{c_{F,max}}{c_{F,min}} \right)^2 - 1} \right).$$

Hierbei sind $C_{Ph}$ die Phasenwellengeschwindigkeit auf einem Wandungsabschnitt 31a, 31b, $C_{F,max}$ die größte zu messende Fluidschallgeschwindigkeit, $C_{F,min}$ die kleinste zu messende Fluidschallgeschwindigkeit, b der lichte Abstand zwischen den vorliegend planen, einander gegenüberliegenden Wandungs- bzw. Wellenleiterabschnitten 31a und 31b und $T_{min}$ die Mindestzeit zwischen zwei aufeinanderfolgenden Signalechos, die verstrichen sein muss, damit die empfangenen Signale in der Auswerteelektronik AS zeitlich aufgelöst werden können.

Wie vorstehend bereits angegeben, kann die Kerbe 4 in einer Weiterbildung zur gezielten Beeinflussung der Reflexion auch teilweise oder vollständig mit einem (Füll-) Material gefüllt sein. Das Füllmaterial kann hierbei ein Material besonders hoher oder niedriger akustischer Impedanz sein, z.B. ein Kunststoffmaterial mit Wolfram-, Wolframkarbid- oder Glashohlkugelfüllung.

Anstelle einer Kerbe 4 kann auch ein alternativ ausgestaltetes Reflexionselement vorgesehen sein, z.B. eine lokale Verdickung 4* an dem ersten oder zweiten Wandungsabschnitt 31a, 31a und/oder an dem Verbindungsstück 31c. Eine mögliche Variante eines Reflexionselements in Form einer Verdickung 4* ist in der Figur 1B gestrichelt dargestellt. Über diese an der Position der Kerbe 4 vorgesehene Verdickung 4* ist die Wanddicke d des ersten Wandungsabschnitts 31a nahe des Verbindungsstücks 31c erhöht, vorliegend mindestens verdoppelt. Die Verdickung 4* erstreckt sich hierbei parallel zur Ausbreitungsrichtung +/-x der Oberflächenwellen OW1, OW1' mit einer Länge, die nur einen Bruchteil der Gesamtlänge des Wandungsabschnitts 31a ausmacht. Die Länge sollte hierbei mindestens der Hälfte der Wellenlänge entsprechend. Beispielsweise liegt die Länge der Verdickung 4* im Bereich von $> 1d$ und $\leq 4d$.

Die gebogene Platte ist durch das Gehäuseteil 2 und das Verschlussteil 5 so geschützt, dass im Bereich der Schallausbreitung Luft oder ein Medium sehr geringer Schallimpedanz die Rückseite (d.h. die nicht dem Medium M zugewandte Außenfläche 311) der gebogenen Platte umschließt. Zudem sorgen weitere Elemente (schraffierte Bereiche des Verschlussteils 5), insbesondere der Schaftabschnitt 50 dafür, dass Elektronik und Piezokeramik ohne Beeinträchtigung der schallführenden Elemente vergossen werden können.

**Bezugszeichenliste**

| | |
|---|---|
| 1 | (Mess-)Vorrichtung |
| 2 | Gehäuseteil |
| 20 | Hohlraum |
| 3 | Wellenleiter |
| 30 | Innenraum |
| 310 | Innenfläche |
| 311 | Außenfläche |
| 31a, 31b | Platten- / Wandungsabschnitt |
| 31c | Gewölbtes Verbindungsstück |
| 4 | Kerbe (Reflexionselement) |
| 4* | Verdickung (Reflexionselement) |
| 5 | Verschlussteil |
| 50 | Schaftabschnitt |
| 51 | Verbindungskopf |
| 52 | Halter |
| 520 | Verschlussabschnitt |
| A | Auslass |
| a, b | Abstand |
| AS | Auswerteeinrichtung (mit Auswerte-/Steuerelektronik) |
| d | Wanddicke |
| E | Einlass |
| M | Medium |
| OW1, OW2 | Oberflächenwelle |
| SE | Transducer (Sender-Empfänger-Einheit) |
| T | Temperatursensorik |
| VW1 | Volumenschallwelle |

**Patentansprüche**

**1.** Verfahren zur Bestimmung von physikalischen, chemischen und/oder biologischen Eigenschaften eines in einem Innenraum (30) eines Wellenleiters (3) befindlichen Mediums (M) mithilfe wenigstens einer akustischen Welle, die sich zumindest teilweise durch das Medium (M) ausgebreitet hat, wobei

a. mittels eines Senders (SE) wenigstens eine erste Oberflächenwelle (OW1) an einer Außenfläche (311) eines den Innenraum (30) berandenden ersten Wandungsabschnitts (31a) des Wellenleiters (3) angeregt wird, die sich an dem ersten Wandungsabschnitt (31a) entlang einer ersten Ausbreitungsrichtung (-x) ausbreitet,

b. die wenigstens eine erste Oberflächenwelle (OW1) an einer dem Medium (M) zugewandten Innenfläche (310) des ersten Wandungsabschnitts (31a) eine sich in dem Medium (M) ausbreitende akustische Welle (VW1) anregt, deren Ausbreitungsrichtung eine von dem ersten Wandungsabschnitt (31a) weg weisende Richtungskomponente umfasst,

c. die sich in dem Medium (M) ausbreitende akustische Welle (VW1) an einer Innenfläche (310) eines dem ersten Wandungsabschnitt (31a) gegenüberliegenden zweiten Wandungsabschnitts (31b) des Wellenleiters (3) zumindest teilweise als zweite Oberflächenwelle (OW2) einkoppelt, die sich an dem zweiten Wandungsabschnitt (31b) entlang einer zweiten Ausbreitungsrichtung (-x) ausbreitet,

d. der erste Wandungsabschnitt (31a) und der zweite Wandungsabschnitt (31b) über ein Verbindungsstück (31c) des Wellenleiters (3) miteinander verbunden sind, so dass sich eine zweite Oberflächenwelle (OW2) wenigstens anteilig über das Verbindungsstück (31c) hinweg zu dem ersten Wandungsabschnitt (31a) ausbreitet,

e. an einem der Wandungsabschnitte (31a, 31b) und/oder dem Verbindungsstück (31c) wenigstens ein Reflexionselement (4) vorgesehen ist, an dem zumindest ein Teil der wenigstens einen ersten Oberflächenwelle (OW1) als dritte Oberflächenwelle (OW1') reflektiert wird, und

f. anhand empfangener Oberflächenwellen (OW1', OW2), die zumindest teilweise auf akustischen Wellen (VW1) zurückgehen, die sich in dem Medium (M) ausgebreitet haben, physikalische, chemische und/oder biologische Eigenschaften des Mediums (M) bestimmt werden, wobei hierfür mittels eines Empfängers (SE) an dem ersten Wandungsabschnitt (31a) zweite und dritte Oberflächenwellen (OW2, OW1') empfangen werden,

wobei der Wellenleiter (3) in einem Hohlraum (20) eines Gehäuseteils (2) der Vorrichtung (1) angeordnet ist.

2. Verfahren nach Anspruch 1, wobei der erste Wandungsabschnitt (31a), der zweite Wandungsabschnitt (31b) und das Verbindungsstück (31c) gemeinsam in zumindest einem Bereich des Innenraums (30) einen U-förmigen Querschnitt des Wellenleiters (3) definieren.

3. Verfahren nach Anspruch 1 oder 2, wobei der Innenraum (30) an einer dem Verbindungsstück (31c) gegenüberliegenden Seite durch ein separates Verschlussteil (5) geschlossen ist.

4. Verfahren nach Anspruch 3, wobei

- das separate Verschlussteil (5) mit wenigstens einem Abschnitt (520) in den Innenraum (30) eingesteckt ist und/oder
- an dem Verschlussteil (5) der Sender und/oder der Empfänger (SE) angeordnet ist und/oder
- an dem Verschlussteil (5) wenigstens ein Teil einer Auswerteeinrichtung (AS) angeordnet ist, mittels der von dem Empfänger (S) beim Empfang von Oberflächenwellen (OW2, OW1') erzeugte Empfangssignale zur Bestimmung der physikalischen, chemischen und/oder biologischen Eigenschaften des Mediums (M) ausgewertet werden und/oder
- an dem Verschlussteil (5) wenigstens ein Teil einer Temperatursensorik (T) angeordnet ist, mittels der eine Temperatur des Mediums (M) und/oder eines den Wellenleiter (3) umgebenden Außenraums bestimmt wird, und/oder
- an dem Verschlussteil (5) wenigstens eine elektronische Komponente (AS, T) zumindest teilweise in einer Vergussmasse aufgenommen ist.

5. Verfahren nach einem der vorhergehenden Ansprüche, wobei das Reflexionselement (4) in einem Abstand a von dem Sender (SE) angeordnet ist, sodass für den Abstand a gilt:

$$a > 0{,}5\,T_{min}c_{Ph} + b\left(1{,}8 + 0{,}5\sqrt{3{,}5\left(\frac{c_{F,max}}{c_{F,min}}\right)^2 - 1}\right),$$

wobei $C_{Ph}$ die Phasenwellengeschwindigkeit auf einem Wandungsabschnitt (31a, 31b), $C_{F,max}$ die größte zu messende Schallgeschwindigkeit im Medium (M), $C_{F,min}$ die kleinste zu messende Schallgeschwindigkeit im Medium (M), b der lichte Abstand zwischen den einander gegenüberliegenden Wandungsabschnitten (31a, 31b) und $T_{min}$ eine durch eine elektronische Auswerteeinheit (AS) vorgegebene Mindestzeit zwischen zwei aufeinanderfolgenden Signalechos ist, die verstrichen sein muss, damit an dem Empfänger (SE) empfangenen Signale in der Auswerteelektronik (AS) zeitlich aufgelöst werden können.

6. Vorrichtung zur Bestimmung von physikalischen, chemischen und/oder biologischen Eigenschaften eines Mediums, mit

- einem akustischen Wellenleiter, der einen mit dem Medium (M) zu füllenden Innenraum (3) aufweist,
- einem Sender (SE) zur Anregung wenigstens einer ersten Oberflächenwelle (OW1) an einer Außenfläche (311) eines den Innenraum (30) berandenden ersten Wandungsabschnitts (31a) des Wellenleiters (3), die sich an dem ersten Wandungsabschnitt (31a) entlang einer ersten Ausbreitungsrichtung (-x) ausbreitet und die an einer dem Medium (M) zugewandten Innenfläche (310) des ersten Wandungsabschnitts (31a) eine sich in dem Medium (M) ausbreitende akustische Welle (VW1) anregt, deren Ausbreitungsrichtung eine von dem ersten Wandungsabschnitt (31a) weg weisende Richtungskomponente umfasst, wobei der Wellenleiter (3) ausgestaltet und eingerichtet ist, dass die sich in dem Medium (M) ausbreitende akustische Welle (VW1) an einer Innenfläche (310) eines dem ersten Wandungsabschnitt (31a) gegenüberliegenden zweiten Wandungsabschnitts (31b) des Wellenleiters (3) zumindest teilweise als zweite Oberflächenwelle (OW2) einkoppelt, die sich an dem zweiten Wandungsabschnitt (31b) entlang einer zweiten Ausbreitungsrichtung (-x und später x) ausbreitet, und
- einer elektronischen Auswerteeinheit (AS) zur Bestimmung physikalischer, chemischer und/oder biologischer Eigenschaften des Mediums (M) anhand empfangener Oberflächenwellen (OW1', OW2), die zumindest teilweise auf akustischen Wellen (VW1) zurückgehen, die sich in dem Medium (M) ausgebreitet haben, wobei
- der erste Wandungsabschnitt (31a) und der zweite Wandungsabschnitt (31b) über ein Verbindungsstück (31c) des Wellenleiters (3) miteinander verbunden sind, so dass sich eine zweite Oberflächenwelle (OW2) wenigstens anteilig über das Verbindungsstück (31c) hinweg zu dem ersten Wandungsabschnitt (31a) ausbreitet,
- an einem der Wandungsabschnitte (31a, 31b) und/oder dem Verbindungsstück (31c) wenigstens ein Reflexionselement (4) zur Reflektion zumindest eines Teil der wenigstens einen ersten Oberflächenwelle (OW1) als dritte Oberflächenwelle (OW1') vorgesehen ist, und
- ein Empfänger (SE) zum Empfang zweiter und dritter Oberflächenwellen (OW2, OW1') an dem ersten Wandungsabschnitt (31a) vorgesehen ist, anhand derer mittels der mit dem Empfänger (SE) gekoppelten Auswerteeinrichtung (AS) physikalische, chemische und/oder biologische Eigenschaften des Mediums (M) bestimmbar sind,

wobei der Wellenleiter (3) in einem Hohlraum (20) eines Gehäuseteils (2) der Vorrichtung (1) angeordnet ist.

7. Vorrichtung nach Anspruch 6, wobei die ersten und zweiten Wandungsabschnitte (31a, 31b) als ebene Plattenabschnitte ausgeführt sind und/oder die ersten und zweiten Wandungsabschnitte (31a, 31b) einstückig mit dem Verbindungsstück (31c) ausgebildet sind.

8. Vorrichtung nach Anspruch 6 oder 7, wobei das Verbindungsstück (31c) bezüglich des das Medium (M) aufnehmenden Innenraums (30) konvex nach außen gewölbt ist.

9. Vorrichtung nach Anspruch 8, wobei ein Wölbungsradius des Verbindungsstücks (31c) dem 1,5-Fachen einer Wanddicke des ersten und/oder zweiten Wandungsabschnitts entspricht.

10. Vorrichtung nach einem der Ansprüche 6 bis 9, wobei der erste Wandungsabschnitt (31a), der zweite Wandungsabschnitt (31b) und das Verbindungsstück (31c) gemeinsam in zumindest einem Bereich des Innenraums (30) einen U-förmigen Querschnitt des Wellenleiters (3) definieren.

11. Vorrichtung nach einem der Ansprüche 6 bis 10, wobei der Innenraum (30) an einer dem Verbindungsstück (31c) gegenüberliegenden Seite durch ein separates Verschlussteil (5) geschlossen ist.

12. Vorrichtung nach Anspruch 11, wobei

- das separate Verschlussteil (5) mit wenigstens einem Abschnitt (520) in den Innenraum (30) eingesteckt ist und/oder

- an dem Verschlussteil (5) der Sender und/oder der Empfänger (SE) angeordnet ist und/oder
- an dem Verschlussteil (5) wenigstens ein Teil der Auswerteeinrichtung (AS) angeordnet ist und/oder
- an dem Verschlussteil (5) wenigstens ein Teil einer Temperatursensorik (T) angeordnet ist, mittels der eine Temperatur des Mediums (M) und/oder eines den Wellenleiter (3) umgebenden Außenraums bestimmt wird, und/oder
- an dem Verschlussteil (5) wenigstens eine elektronische Komponente (AS, T) zumindest teilweise in einer Vergussmasse aufgenommen ist.

**13.** Vorrichtung nach einem der Ansprüche 6 bis 12, wobei das Reflexionselement eine Aussparung, insbesondere eineKerbe (4), in dem ersten Wandungsabschnitt (31a), dem zweiten Wandungsabschnitt (31b) und/oder in dem Verbindungsstück (31c) umfasst.

**14.** Vorrichtung nach einem der Ansprüche 6 bis 13, wobei das Reflexionselement (4) in einem Abstand a von dem Sender (SE) angeordnet ist, sodass für den Abstand a gilt:

$$a > 0{,}5 T_{min} c_{Ph} + b \left( 1{,}8 + 0{,}5 \sqrt{3{,}5 \left( \frac{c_{F,max}}{c_{F,min}} \right)^2 - 1} \right),$$

wobei $C_{Ph}$ die Phasenwellengeschwindigkeit auf einem Wandungsabschnitt (31a, 31b), $C_{F,max}$ die größte zu messende Schallgeschwindigkeit im Medium (M), $C_{F,min}$ die kleinste zu messende Schallgeschwindigkeit im Medium (M), b der lichte Abstand zwischen den einander gegenüberliegenden Wandungsabschnitten (31a, 31b) und $T_{min}$ eine durch die elektronische Auswerteeinheit (AS) vorgegebene Mindestzeit zwischen zwei aufeinanderfolgenden Signalechos ist, die verstrichen sein muss, damit an dem Empfänger (SE) empfangene Signale in der Auswerteelektronik (AS) zeitlich aufgelöst werden können.

**15.** Vorrichtung nach einem der Ansprüche 6 bis 14, wobei der Hohlraum (20) mit einem Material niedriger akustischer Impedanz, insbesondere kleiner 150000 Rayl (im MKS-Einheitensystem mit 1 Rayl = 1 kg/m²s) gefüllt oder vergossen ist.

**Claims**

**1.** A method for determining physical, chemical and/or biological properties of a medium (M) situated in an interior (30) of a waveguide (3) with the aid of at least one acoustic wave which has propagated at least in part through the medium (M), wherein

a. at least one surface wave (OW1) is excited by means of a transmitter (SE) at an outer surface (311) of a first wall portion (31a) of the waveguide (3) that bounds the interior (30), said surface wave propagating at the first wall portion (31a) along a first propagation direction (-x),
b. the at least one surface wave (OW1) excites an acoustic wave (VW1) propagating in the medium (M) at an inner surface (310) of the first wall portion (31a) facing the medium (M), the propagation direction of said acoustic wave comprising a directional component pointing away from the first wall portion (31a),
c. the acoustic wave (VW1) propagating in the medium (M) at least partly couples into an inner surface (310) of a second wall portion (31b) of the waveguide (3), lying opposite the first wall portion (31a), as a second surface wave (OW2), which propagates at the second wall portion (31b) along a second propagation direction (-x), and
d. the first wall portion (31a) and the second wall portion (31b) are connected to one another by way of a connecting piece (31c) of the waveguide (3) in such a way that a second surface wave (OW2) propagates at least in part over the connecting piece (31c) to the first wall portion (31a),
e. at least one reflective element (4) is provided at one of the wall portions (31a, 31b) and/or at the connecting piece (31c), at least part of the at least one first surface wave (OW1) being reflected at said reflective element as a third surface wave (OW1'), and
f. physical, chemical and/or biological properties of the medium (M) are determined on the basis of the received surface waves (OW1', OW2), which can be at least partly traced back to the acoustic waves (VW1) which have propagated in the medium (M), wherein for this second and third surface waves (OW2, OW1') are received by means of a receiver (SE) at the first wall portion (31a),

wherein the waveguide (3) is arranged in a cavity (20) of a housing part (2) of the apparatus (1).

2. The method as claimed in claim 1, wherein the first wall portion (31a), the second wall portion (31b) and the connecting piece (31c) together define a U-shaped cross section of the waveguide (3) in at least one region of the interior (30).

3. The method as claimed in claim 1 or 2, wherein the interior (30) is closed by separate closure part (5) at a side lying opposite to the connecting piece (31c).

4. The method as claimed in claim 3, wherein

   - the separate closure part (5) is inserted into the interior (30) with at least one portion (520) and/or
   - the transmitter and/or the receiver (SE) is arranged at the closure part (5) and/or
   - at least part of an evaluation device (AS) is arranged at the closure part (5), reception signals produced by the receiver (SE) upon the reception of surface waves (OW2, OW1') being evaluated by said evaluation device for the purposes of determining the physical, chemical and/or biological properties of the medium (M) and/or
   - at least part of a temperature sensor system (T) is arranged at the closure part (5), a temperature of the medium (M) and/or of an exterior surrounding the waveguide (3) being determined by means of said temperature sensor system, and/or
   - at least one electronic component (AS, T) is at least partly received in a potting compound on the closure part (5).

5. The method as claimed in any one of the preceding claims, wherein the reflective element (4) is arranged at a distance a from the transmitter (SE), such that the following applies to the distance a:

$$a > 0.5 T_{min} c_{Ph} + b \left( 1.8 + 0.5 \sqrt{ 3.5 \left( \frac{c_{F,max}}{c_{F,min}} \right)^2 - 1 } \right),$$

where $C_{Ph}$ denotes the wave phase speed on a wall portion (31a, 31b), $C_{F,max}$ denotes the fastest sound speed to be measured in the medium (M), $C_{F,min}$ denotes the slowest sound speed to be measured in the medium (M), b denotes the clear distance between the mutually opposite wall portions (31a, 31b) and $T_{min}$ denotes a minimum time between two successive signal echoes, predetermined by an electronic evaluation unit (AS), which minimum time must have elapsed so that signals received at the receiver (SE) can be temporally resolved in the evaluation electronics (AS).

6. An apparatus for determining physical, chemical and/or biological properties of the medium, comprising

   - an acoustic waveguide, which has an interior (3) to be filled by the medium (M),
   - a transmitter (SE) for exciting at least one first surface wave (OW1) on an outer surface (311) of a first wall portion (31a) of the waveguide (3) bounding the interior (30), said surface wave propagating at the first wall portion (31a) along a first propagation direction (-x) and exciting an acoustic wave (VW1) propagating in the medium (M) at an inner surface (310) of the first wall portion (31a) facing the medium (M), the propagation direction of said acoustic wave comprising a directional component pointing away from the first wall portion (31a), wherein the waveguide (3) is embodied and configured in such a way that the acoustic wave (VW1) propagating in the medium (M) at least partly couples into an inner surface (310) of a second wall portion (31b) of the waveguide (3), lying opposite the first wall portion (31a), as a second surface wave (OW2), which propagates at the second wall portion (31b) along a second propagation direction (-x and later x), and
   - an electronic evaluation unit (AS) for determination of physical, chemical and/or biological properties of the medium (M) on the basis of received surface waves (OW1', OW2), which can be at least partly traced back to the acoustic waves (VW1) which have propagated in the medium (M),
   wherein
   - the first wall portion (31a) and the second wall portion (31b) are connected to one another by way of the connecting piece (31c) of the waveguide (3) in such a way that a second surface wave (OW2) propagates at least in part over the connecting piece (31c) to the first wall portion (31a),
   - at least one reflective element (4) is provided at one of the wall portions (31a, 31b) and/or at the connecting piece (31c) for reflection of at least part of the at least one first surface wave (OW1) as a third surface wave (OW1'), and
   - a receiver (SE) for receiving second and third surface waves (OW2, OW1') is provided at the first wall portion (31a), on the basis of which physical, chemical and/or biological properties of the medium (M) are determinable by means of the evaluation device (AS) coupled to the receiver (SE,

wherein the waveguide (3) is arranged in a cavity (20) of a housing part (2) of the apparatus (1).

7. The apparatus as claimed in claim 6, wherein the first and second wall portions (31a, 31b) are embodied as plane plate portions and/or the first and second wall portions (31a, 31b) have an integral embodiment with the connecting piece (31c).

8. The apparatus as claimed in claim 6 or 7, wherein the connecting piece (31c) curves outward in a convex form in relation to the interior (30) that receives the medium (M).

9. The apparatus as claimed in claim 8, wherein a radius of curvature of the connecting piece (31c) corresponds to 1.5-times the wall thickness of the first and/or second wall portion.

10. The apparatus as claimed in any one of claims 6 to 9, wherein the first wall portion (31a), the second wall portion (31b) and the connecting piece (31c) together define a U-shaped cross section of the waveguide (3) in at least one region of the interior (30).

11. The apparatus as claimed in any one of claims 6 to 10, wherein the interior (30) is closed by separate closure part (5) at a side lying opposite to the connecting piece (31c).

12. The apparatus as claimed in claim 11, wherein

- the separate closure part (5) is inserted into the interior (30) with at least one portion (520) and/or
- the transmitter and/or the receiver (SE) is arranged at the closure part (5) and/or
- at least part of an evaluation device (AS) is arranged at the closure part (5) and/or
- at least part of a temperature sensor system (T) is arranged at the closure part (5), a temperature of the medium (M) and/or of an exterior surrounding the waveguide (3) being determined by means of said temperature sensor system, and/or
- at least one electronic component (AS, T) is at least partly received in a potting compound on the closure part (5).

13. The apparatus as claimed in any one of claims 6 to 12, wherein the reflective element comprises a cut-out, in particular a notch (4), in the first wall portion (31a), the second wall portion (31b) and/or in the connecting piece (31c).

14. The apparatus as claimed in any one of the claims 6 to 13, wherein in that the reflective element (4) is arranged at a distance a from the transmitter (SE), such that the following applies to the distance a:

$$a > 0.5 T_{min} c_{Ph} + b \left( 1.8 + 0.5 \sqrt{3.5 \left( \frac{c_{F,max}}{c_{F,min}} \right)^2 - 1} \right),$$

where $c_{Ph}$ denotes the wave phase speed on a wall portion (31a, 31b), $c_{F,max}$ denotes the fastest sound speed to be measured in the medium (M), $c_{F,min}$ denotes the slowest sound speed to be measured in the medium (M), b denotes the clear distance between the mutually opposite wall portions (31a, 31b) and $T_{min}$ denotes a minimum time between two successive signal echoes, predetermined by an electronic evaluation unit (AS), which minimum time must have elapsed so that signals received at the receiver (SE) can be temporally resolved in the evaluation electronics (AS).

15. The method as claimed in any one of the claims 6 to 14, wherein the cavity (20) is filled or cast with a material of low acoustic impedance, in particular of less than 150 000 Rayl (with 1 Rayl = 1 $kg/m^2s$ in the MKS system of units).

## Revendications

1. Procédé pour définir des propriétés physiques, chimiques et/ou biologiques d'un milieu (M) se trouvant dans un espace intérieur (30) d'un guide d'ondes (3) à l'aide d'au moins une onde acoustique, qui se propage au moins en partie à travers le milieu (M), dans lequel

a. au moins une première onde de surface (OW1) est excitée sur une face extérieure (311) d'une première section de paroi (31a), bordant l'espace intérieur (30), du guide d'ondes (3) au moyen d'un émetteur (SE), laquelle se propage sur la première section de paroi (31a) le long d'une première direction de propagation (-x),

b. l'au moins une première onde de surface (OW1) excite sur une face intérieure (310), tournée vers le milieu (M), de la première section de paroi (31a), une onde acoustique (VW1) se propageant dans le milieu (M), dont la direction de propagation comprend une composante directionnelle pointant de manière à s'éloigner de la première section de paroi (31a),

c. l'onde acoustique (VW1) se propageant dans le milieu (M) est injectée sur une face intérieure (310) d'une deuxième section de paroi (31b), faisant face à la première section de paroi (31a), du guide d'ondes (3) au moins en partie en tant que deuxième onde de surface (OW2), qui se propage sur la deuxième section de paroi (31b) le long d'une deuxième direction de propagation (-x),

d. la première section de paroi (31a) et la deuxième section de paroi (31b) sont reliées entre elles par l'intermédiaire d'une pièce de liaison (31c) du guide d'ondes (3) de sorte qu'une deuxième onde de surface (OW2) se propage au moins proportionnellement au-delà de la pièce de liaison (31c) vers la première section de paroi (31a),

e. au moins un élément de réflexion (4) est prévu sur une des sections de paroi (31a, 31b) et/ou sur la pièce de liaison (31c), sur lequel est réfléchie au moins une partie de l'au moins une première onde de surface (OW1) en tant que troisième onde de surface (OW1'), et

f. des propriétés physiques, chimiques et/ou biologiques du milieu (M) sont définies à l'aide d'ondes de surface (OW1', OW2) reçues, qui sont liées au moins en partie à des ondes acoustiques (VW1) qui se sont propagées dans le milieu (M), dans lequel à cet effet des deuxièmes et troisièmes ondes de surface (OW2, OW1') sont reçues au moyen d'un récepteur (SE) sur la première section de paroi (31a),

le guide d'ondes (3) étant disposé dans une cavité (20) d'une partie de boîtier (2) du dispositif (1).

2. Procédé selon la revendication 1, dans lequel la première section de paroi (31a), la deuxième section de paroi (31b) et la pièce de liaison (31c) définissent conjointement dans au moins une zone de l'espace intérieur (30) une section transversale en forme de U du guide d'ondes (3).

3. Procédé selon la revendication 1 ou 2, dans lequel l'espace intérieur (30) est fermé par une partie de fermeture (5) séparée sur un côté faisant face à la pièce de liaison (31c).

4. Procédé selon la revendication 3, dans lequel

- la pièce de fermeture (5) séparée est enfichée dans l'espace intérieur (30) par au moins une section (520), et/ou
- l'émetteur et/ou le récepteur (SE) sont disposés sur la pièce de fermeture (5), et/ou
- est disposée sur la pièce de fermeture (5) au moins une partie d'un dispositif d'évaluation (AS), au moyen duquel des signaux de réception générés par le récepteur (SE) lors de la réception d'ondes de surface (OW2, OW1') sont évalués pour définir les propriétés physiques, chimiques et/ou biologiques du milieu (M), et/ou
- est disposée sur la partie de fermeture (5) au moins une partie d'un système de détection de température (T), au moyen duquel une température du milieu (M) et/ou d'un espace extérieur entourant le guide d'ondes (3) est définie, et/ou
- au moins un composant électronique (AS, T) est logé au moins en partie dans une masse de scellement sur la partie de fermeture (5).

5. Procédé selon l'une quelconque des revendications précédentes, dans lequel l'élément de réflexion (4) est disposé à une distance a de l'émetteur (SE) si bien que s'applique pour la distance a :

$$a > 0{,}5\,T_{min}c_{Ph} + b\left(1{,}8 + 0{,}5\sqrt{3{,}5\left(\frac{c_{F,max}}{c_{F,min}}\right)^2 - 1}\right),$$

dans lequel $C_{Ph}$ est la vitesse d'onde de De Broglie sur une section de paroi (31 a, 31 b), $C_{F,max}$ est la plus grande vitesse du son à mesurer dans le milieu (M), $C_{F,min}$ est la vitesse du son la petite à mesurer dans le milieu (M), b est la petite distance entre les sections de paroi (31a, 31b) se faisant face l'une l'autre et $T_{min}$ est une durée minimale spécifiée par une unité d'évaluation électronique (AS) entre deux échos de signaux se suivant l'un l'autre, qui doit s'écouler afin que des signaux reçus sur le récepteur (SE) puissent être résolus dans le temps dans l'électronique d'évaluation (AS).

6. Dispositif pour définir des propriétés physiques, chimiques et/ou biologiques d'un milieu, avec

   - un guide d'ondes acoustique, qui présente un espace intérieur (3) à remplir avec le milieu (M),
   - un récepteur (SE) pour exciter au moins une première onde de surface (OW1) sur une face extérieure (311) d'une première section de paroi (31a), bordant l'espace intérieur (30), du guide d'ondes (3), qui se propage sur la première section de paroi (31a) le long d'une première direction de propagation (-x) et qui excite, sur une face intérieure (310), tournée vers le milieu (M), de la première section de paroi (31a), une onde acoustique (VW1) se propageant dans le milieu (M), dont la direction de propagation comprend une composante directionnelle pointant de manière à s'éloigner de la première section de paroi (31a), dans lequel le guide d'ondes (3) est configuré et mis au point pour que l'onde acoustique (VW1) se propageant dans le milieu (M) soit injectée sur une face intérieure (310) d'une deuxième section de paroi (31b), faisant face à la première section de paroi (31a), du guide d'ondes (3), au moins en partie en tant que deuxième onde de surface (OW2), qui se propage sur la deuxième section de paroi (31b) le long d'une deuxième direction de propagation (-x et plus tard x), et
   - une unité d'évaluation électronique (AS) pour définir des propriétés physiques, chimiques et/ou biologiques du milieu (M) à l'aide d'ondes de surface (OW1', OW2) reçues, qui sont liées au moins en partie à des ondes acoustiques (VW1) qui se sont propagées dans le milieu (M),
   dans lequel
   - la première section de paroi (31a) et la deuxième section de paroi (31b) sont reliées entre elles par l'intermédiaire d'une pièce de liaison (31c) du guide d'ondes (3) de sorte qu'une deuxième onde de surface (OW2) se propage au moins proportionnellement au-delà de la pièce de liaison (31c) vers la première section de paroi (31a),
   - est prévu, sur une des sections de paroi (31a, 31b) et/ou la pièce de liaison (31c), au moins un élément de réflexion (4) pour la réflexion au moins d'une partie de l'au moins une première onde de surface (OW1) en tant que troisième onde de surface (OW1'), et
   - un récepteur (SE) est prévu pour recevoir des deuxièmes et troisièmes ondes de surface (OW2, OW1') sur la première section de paroi (31a), à l'aide desquelles des propriétés physiques, chimiques et/ou biologiques du milieu (M) peuvent être définies au moyen du dispositif d'évaluation (AS) couplé au récepteur (SE),

   le guide d'ondes (3) étant disposé dans une cavité (20) d'une partie de boîtier (2) du dispositif (1).

7. Dispositif selon la revendication 6, dans lequel
   les premières et deuxièmes sections de paroi (31a, 31b) sont réalisées en tant que sections de plaque planes et/ou les premières et deuxièmes sections de paroi (31a, 31b) sont réalisées d'un seul tenant avec la pièce de liaison (31c).

8. Dispositif selon la revendication 6 ou 7, dans lequel la pièce de liaison (31c) est bombée de manière convexe vers l'extérieur par rapport à l'espace intérieur (30) logeant le milieu (M).

9. Dispositif selon la revendication 8, dans lequel
   un rayon de bombement de la pièce de liaison (31c) correspond à 1,5 fois une épaisseur de cloison de la première et/ou deuxième section de paroi.

10. Dispositif selon l'une quelconque des revendications 6 à 9, dans lequel
    la première section de paroi (31a), la deuxième section de paroi (31b) et la pièce de liaison (31c) définissent conjointement dans au moins une zone de l'espace intérieur (30) une section transversale en forme de U du guide d'ondes (3).

11. Dispositif selon l'une quelconque des revendications 6 à 10, dans lequel
    l'espace intérieur (30) est fermé sur un côté faisant face à la pièce de liaison (31c) par une partie de fermeture (5) séparée.

12. Dispositif selon la revendication 11, dans lequel

- la partie de fermeture (5) séparée est enfichée dans l'espace intérieur (30) par au moins une section (520), et/ou
- l'émetteur et/ou le récepteur (SE) sont disposés sur la partie de fermeture (5), et/ou
- au moins une partie du dispositif d'évaluation (AS) est disposée sur la partie de fermeture (5), et/ou
- au moins une partie d'un système de détection de température (T) est disposée sur la partie de fermeture (5), au moyen duquel une température du milieu (M) et/ou d'un espace extérieur entourant le guide d'ondes (3) est définie et/ou
- au moins un composant électronique (AS, T) est logé au moins en partie dans une masse de scellement sur la partie de fermeture (5).

13. Dispositif selon l'une quelconque des revendications 6 à 12, dans lequel l'élément de réflexion comprend un évidement, en particulier une encoche (4) dans la première section de paroi (31a), la deuxième section de paroi (31b) et/ou dans la pièce de liaison (31c).

14. Dispositif selon l'une quelconque des revendications 6 à 13, dans lequel l'élément de réflexion (4) est disposé à une distance a par rapport à l'émetteur (SE) si bien que la distance a s'applique :

$$a > 0{,}5\,T_{min}\,c_{Ph} + b\left(1{,}8 + 0{,}5\sqrt{3{,}5\left(\frac{c_{F,max}}{c_{F,min}}\right)^2 - 1}\right),$$

dans lequel $C_{Ph}$ est la vitesse d'onde de De Broglie sur une section de paroi (31 a, 31 b), $C_{F,max}$ est la plus grande vitesse du son à mesurer dans le milieu (M), $C_{F,min}$ est la vitesse du son la plus petite à mesurer dans le milieu (M), b est la petite distance entre les sections de paroi (31a, 31b) se faisant face les unes les autres et $T_{min}$ est une durée minimale spécifiée par l'unité d'évaluation électronique (AS) entre deux échos de signaux se suivant les uns les autres, qui doit s'écouler pour que des signaux reçus sur le récepteur (SE) puissent être résolus dans le temps dans l'électronique d'évaluation (AS).

15. Dispositif selon l'une quelconque des revendications 6 à 14, dans lequel la cavité (20) est remplie ou scellée avec un matériau à impédance acoustique basse, en particulier inférieure à 150000 Rayl (dans le système d'unités MKS avec 1 Rayl = 1 kg/m$^2$s).

FIG 1A

FIG 1B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008034878 A2
- EP 2343548 A2
- US 6378377 B2
- DE 102011119673 A1